# FASCICULE DE BREVET EUROPEEN

(11) **EP 1 171 664 B1**
(45) Date de publication et mention de la délivrance du brevet: **08.09.2004**
(21) Numéro de dépôt: 00917114.1
(22) Date de dépôt: 30.03.2000
(51) Int. Cl.: D06P 5/20, D06P 5/22, D06P 3/52, G02C 7/02

(54) **PROCEDE DE COLORATION D'UN ARITCLE TRANSPARENT EN POLYCARBONATE ET ARTICLE OBTENU**
VERFAHREN ZUM FÄRBEN EINES DURCHSICHTIGEN ARTIKELS AUS POLYCARBONAT SOWIE DARAUS HERGESTELLTE ARTIKEL
METHOD FOR COLOURING A TRANSPARENT ARTICLE MADE OF POLYCARBONATE AND RESULTING ARTICLE

(30) Priorité: 08.04.1999 FR 9904409
(43) Date de publication de la demande: 16.01.2002
(73) Titulaire: ESSILOR INTERNATIONAL COMPAGNIE GENERALE D'OPTIQUE, 94227 Charenton cédex (FR)
(72) Inventeur: BAILLET, Gilles, F-75020 Paris (FR)
(74) Mandataire: Catherine, Alain
(86) Numéro de dépôt international: PCT/FR2000/000792
(87) Numéro de publication internationale: WO 2000/061857

(56) Documents cités:
- EP-A- 0 615 144
- US-A- 5 443 597
- DATABASE WPI Section Ch, Week 198925 Derwent Publications Ltd., London, GB; Class A23, AN 1989-181566 XP002127053 & JP 01 118682 A (AGENCY OF IND SCI & TECHNOLOGY), 11 mai 1989 (1989-05-11)
- DATABASE WPI Section Ch, Week 198238 Derwent Publications Ltd., London, GB; Class A35, AN 1982-80595E XP002127054 & JP 57 133286 A (AGENCY OF IND SCI & TECHNOLOGY), 17 août 1982 (1982-08-17)
- UEDA M ET AL: "PHYSICO-CHEMICAL MODIFICATIONS OF FIBRES AND THEIR EFFECT ON COLORATION AND FINISHING" REVIEW OF PROGRESS IN COLORATION & RELATED TOPICS,GB,SOCIETY OF DYERS AND COLOURISTS. BRADFORD, vol. 26, 1996, page 9-19 XP000640462 ISSN: 0557-9325
- DATABASE WPI Section Ch, Week 199303 Derwent Publications Ltd., London, GB; Class A23, AN 1993-024303 XP002127055 & JP 04 353529 A (TEIJIN LTD), 8 décembre 1992 (1992-12-08)
- DATABASE WPI Section Ch, Week 198715 Derwent Publications Ltd., London, GB; Class A18, AN 1987-104163 XP002127056 & JP 62 050336 A (SHOWA DENKO KK), 5 mars 1987 (1987-03-05)

## Description

La présente invention concerne d'une manière générale un procédé de coloration d'un article transparent en polycarbonate, par exemple un article d'optique ou ophtalmique, et en particulier une lentille.

Il est connu que le polycarbonate (PC) est un matériau difficile à colorer.

Les lentilles ophtalmiques en matériau organique classique tel que le matériau obtenu par polymérisation du diallylcarbonate de diéthylèneglycol, sont généralement colorées par trempage dans des bains aqueux de colorants dispersés, les bains étant maintenus à une température de l'ordre de 95°C.

Un tel procédé n'est pas directement transposable à la coloration d'articles en polycarbonate, par exemple une lentille en polycarbonate.

Diverses techniques ont été proposées pour colorer un article en polycarbonate comme l'application, à la surface de l'article en PC, de solutions de pigments dans un solvant organique capable de partiellement dissoudre ou de gonfler le polycarbonate en surface, de façon à permettre au pigment de pénétrer sous la surface de l'article.

Ces procédés, agressifs pour la surface de l'article traité, ne conviennent pas dans le cadre d'une application ophtalmique.

Par ailleurs, compte tenu des directives internationales visant à la réduction des solvants organiques, l'utilisation de tels procédés n'est pas souhaitable.

Le document US-5 443 597 décrit un procédé de coloration d'un article, tel qu'un élément d'optique, formé d'un copolymère polycarbonate-polyester, qui consiste à soumettre le copolymère à une irradiation UV d'intensité prédéterminée, pendant une durée prédéterminée, puis à soumettre l'article à un traitement de coloration, par exemple par trempage dans une solution aqueuse d'un colorant.

Selon ce document, la présence de chaînons polyesters dans le squelette du copolymère est essentiel car c'est la liaison polyester qui est rompue par l'irradiation et qui permet la pénétration ultérieure du colorant.

En outre, les profondeurs de pénétration des pigments sont faibles, d'environ 10 à 15 nm. Pour obtenir une pénétration plus importante, le document enseigne que le copolymère doit alors comporter une proportion plus importante de polyester.

La plupart des matériaux polycarbonates utilisés pour l'optique ophtalmique sont des matériaux à base d'homopolycarbonate.

Le document JP 1-118682-A décrit un procédé de coloration de surface d'un film de polycarbonate qui comprend l'irradiation pendant 262 heures de la surface du film par un rayonnement UV puis immersion du film dans une solution de colorant pendant 17 heures.

Il serait donc souhaitable de disposer d'un procédé de coloration simple d'articles en polycarbonate, en particulier en homopolycarbonate, par exemple des articles d'optique et ophtalmiques tels que des lentilles, permettant d'utiliser des colorants classiques en phase aqueuse.

En outre, ce procédé, particulièrement destiné à la coloration de lentilles ophtalmiques en PC, en particulier des lentilles pour lunettes, doit non seulement être simple mais permettre une coloration des lentilles à la demande du client.

Il doit permettre de doser l'intensité de coloration : teinte A (claire), teinte B (moyenne), teinte C (foncée).

Le procédé ne doit pas altérer de façon significative les propriétés essentielles de la lentille telles que la transparence, la résistance aux chocs et aux rayures.

La coloration obtenue doit être stable dans le temps.

On a maintenant trouvé qu'il était possible de provoquer, au moyen d'une irradiation appropriée, une photodégradation du polycarbonate sur une profondeur prédéterminée de l'article en polycarbonate ne comportant pas de motifs polyesters à partir d'une face de l'article, sans altérer notablement les autres propriétés optiques et mécaniques requises, en particulier pour une application en optique ophtalmique.

Un article en PC ainsi traité peut être coloré avec facilité, en particulier au moyen de dispersions et solutions aqueuses de colorants et pigments.

Selon l'invention, le procédé de coloration d'un article transparent en matériau polycarbonate ne comportant pas de motifs polyesters, comprend :
a) la photodégradation du matériau polycarbonate de l'article transparent par irradiation au moyen d'un rayonnement UV prédéterminé, depuis au moins une première face de l'article, pour réaliser dans l'article au moins une première couche superficielle photodégradée du matériau polycarbonate ayant une épaisseur d'au moins 1 µm, de préférence d'au moins 2 µm; et
b) la mise en contact d'au moins ladite première face de l'article avec un agent de coloration pour faire diffuser l'agent de coloration dans une épaisseur d'au moins 1 µm, de préférence d'au moins 2 µm, de la première couche superficielle photodégradée.

Bien évidemment, le procédé de l'invention peut aussi comprendre l'irradiation de l'article pour provoquer une photodégradation du matériau polycarbonate depuis deux faces opposées de l'article, (chacune des faces étant alors soumise à la photodégradation) pour former dans l'article deux couches superficielles photodégradées du matériau polycarbonate ayant chacune une épaisseur d'au moins 1 à 2 µm.

Dans ce dernier cas, les deux faces de l'article sont alors mises en contact avec l'agent de coloration pour faire diffuser l'agent de coloration dans une épaisseur d'au moins 1 µm, de préférence d'au moins 2 µm, pour chacune des deux couches superficielles photodégradées.

De préférence, l'épaisseur de la couche superficielle photodégradée ou des couches superficielles photodégradées sera de 2 à 20 µm, et mieux de 2 à 10 µm.

L'agent de coloration peut être diffusé dans toute l'épaisseur de la (ou des) couche(s) superficielle(s) photodégradée(s).

Le rayonnement UV de l'étape de photodégradation par irradiation a un spectre de longueur d'onde tel que, lors de l'irradiation, au moins 50%, de préférence au moins 60 %, et mieux encore, au moins 65 % de l'énergie d'irradiation provienne d'une partie du rayonnement de longueur d'onde ≤ 320 nm. De préférence encore, l'énergie d'irradiation de l'article due à la partie du rayonnement UV de longueur d'onde ≤ 320 nm est de 2,4 à 48 J/cm², mieux de 10 à 30 J/cm², cependant que l'énergie d'irradiation de l'article due à la partie du rayonnement UV de longueur d'onde > 320 nm est de 0,9 J/cm² à 15 J/cm², mieux de 2 J/cm² à 8 J/cm². (Comme cela est bien connu, les rayonnements UV ont un spectre de longueur d'onde allant de 200 à 400 nm).

Lors de l'étape de photodégradation, la durée pendant laquelle chaque point de l'une des faces de la lentille est soumis à l'irradiation est inférieure à 10 minutes, de préférence inférieure à 2 minutes et mieux encore inférieure à 30 secondes.

La durée optimale de l'étape de photodégradation au cours de laquelle les énergies mentionnées plus haut sont reçues par la lentille varie de 0, 1 à 10 secondes, généralement et préférentiellement de 0,4 à 4 secondes.

On peut montrer la modification de la structure chimique de surface du PC par spectroscopie infrarouge en mode ATR (Attenuated Total Reflectance) à angle de 45°C. Cette technique de surface permet de caractériser la structure de PC dans une profondeur de 1 à 2 µm.

On peut voir, par rapport à la surface du PC non dégradé, une augmentation de l'intensité des bandes de stretching (élongation) des groupements OH (alcools, acides, hydroperoxydes) mettant en évidence le processus de photooxydation.

Les rayonnements UV convenant pour le procédé de l'invention peuvent être obtenus, par exemple en utilisant une lampe UV "H" de la Société FUSION UV SYSTEM à 50% de sa puissance nominale ou une lampe UV "D" de cette même société à 40% de sa puissance nominale.

L'article "Photovieillissement : évaluation des sources lumineuses", Agnès RIVATON, Jean-Luc GARDETTE et Jacques LEMAIRE, Caoutchoucs et Plastiques n° 651 - Mai 1985, pages 81 à 85, montre que le photovieillissement du polycarbonate de bisphénol-A possède une double photochimie, à savoir une photochimie "intrinsèque" (attaque de surface) et une photochimie "induite" associée à l'excitation des défauts ou impuretés (attaque en profondeur).

Sans vouloir être lié par une théorie, on pense que pour former les couches superficielles photodégradées selon l'invention, l'irradiation UV de l'article en polycarbonate doit être telle que le photovieillissement procède essentiellement selon une photochimie "intrinsèque", c'est-à-dire une attaque de surface. Ainsi, on peut obtenir un article en matériau polycarbonate ayant une couche superficielle photodégradée améliorant l'aptitude à la coloration de l'article sans nuire aux autres propriétés optiques et mécaniques du matériau polycarbonate.

Les polycarbonates convenant pour la présente invention sont tous les polycarbonates ne comportant pas de motifs polyesters.

On entend par polycarbonate dans la présente invention, aussi bien les homopolycarbonates que les copolycarbonates et copolycarbonates séquencés, étant entendu que les copolycarbonates comportant des motifs polyesters sont exclus.

Ces polycarbonates sont disponibles dans le commerce, par exemple auprès des Sociétés GENERAL ELECTRIC COMPANY sous la marque LEXAN®, TEIJIN sous la marque PANLTTE®, BAYER sous la marque BAYBLEND®, MOBAY CHEMICAL Corp. sous la marque MAKROLON® et DOW CHEMICAL Co. sous la marque CALIBRE®.

Les polycarbonates préférés sont les homopolycarbonates, en particulier les homopolycarbonates de bisphénol-A et de tétraméthyl-3,5 bisphénol-A (TMBPA).

De préférence, le matériau polycarbonate contient une quantité effective d'un absorbeur UV.

Les absorbeurs UV sont des adjuvants bien connus dans le domaine des polymères et sont disponibles dans le commerce.

Parmi ces absorbeurs UV on peut citer les benzotriazoles, les benzophénones, les dihydroxybenzophénones, les benzimidazoles et les phényl benzoates.

Parmi les benzotriazoles, on peut citer les benzotriazoles de formule : 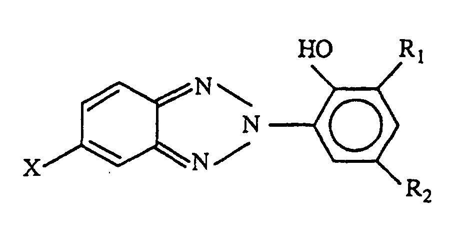 où
R₁ représente H ou un radical alkyle, de préférence en C₁-C₆,
R₂ représente H ou un radical alkyle, de préférence en C₁-C₈, et
X représente H ou Cl.

Parmi les benzophénones, on peut citer les composés de formule : 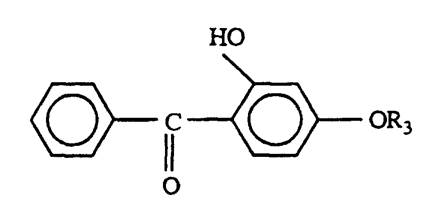 où R₃ est un radical alkyle, de préférence en C₁-C₁₃.

Parmi les dihydroxybenzophénones, on peut citer les composés de formule : 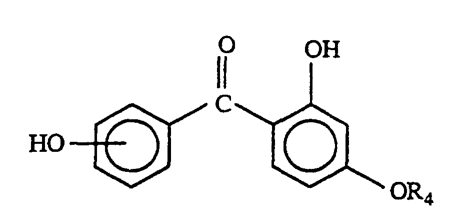 où R₄ est un radical alkyle, de préférence en C₁-C₈.

Parmi les phényl benzoates, on peut citer les composés de formule : 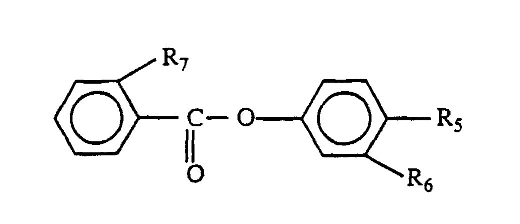 où
R₅ représente H ou un radical alkyle, de préférence en C₁-C₄, et
R₆ et R₇ représentent H ou OH.

La proportion d'absorbeur UV dans le matériau polycarbonate varie en général de 0 à 10% en poids par rapport au poids total du matériau, de préférence de 0 à 5%, et mieux représente 2,5% en poids environ.

Le matériau polycarbonate peut comporter tout autre adjuvant classiquement utilisé et ne nuisant pas aux propriétés optiques du matériau, tel que des antioxydants, des lubrifiants internes ou externes, des agents ignifugeants et des agents anti-statiques dans les proportions usuelles.

On peut utiliser dans l'étape de coloration de l'article, selon le procédé de l'invention, tout colorant ou pigment classiquement utilisé pour la coloration des articles transparents en matériau polymère y compris des colorants et pigments photochromiques.

On peut aussi, à ce stade, faire également diffuser un absorbeur UV.

Parmi les colorants classiquement utilisés, on peut citer les colorants azoïques et les colorants anthraquinoniques.

Les colorants azoïques peuvent être des colorants monoazoïques, par exemple de formule : 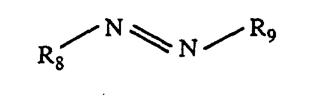 où R₈ et R₉ sont des radicaux aryles ou des hétérocycles, de préférence des hétérocycles, ou des colorants diazoïques, par exemple de formule : 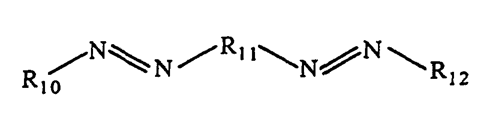 où R₁₀, R₁₁ et R₁₂ sont des radicaux aryles ou des hétérocycles, de préférence des hétérocycles.

Les colorants anthraquinoniques peuvent être représentés par la formule : 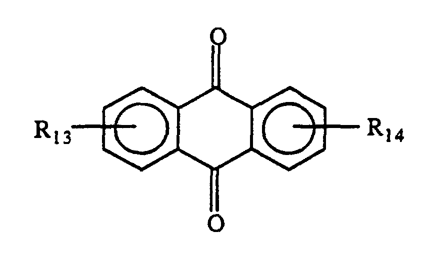 où R₁₃ et R₁₄ représentent H, OH, un groupe amine, un groupe alcoxy, un groupe fluorocarboné ou un groupe acylamino.

D'autres colorants peuvent être des absorbeurs infrarouges ou des colorants lasers.

Parmi les absorbeurs infrarouges, on peut citer les composés suivants : 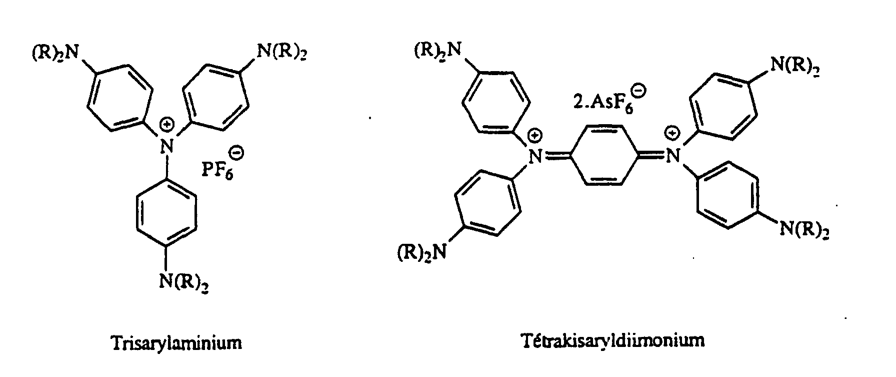 dans lesquels R représente H ou un alkyle, de préférence en C₁-C₄.

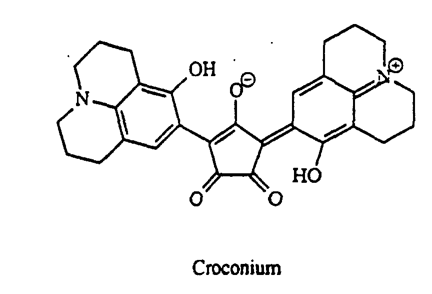

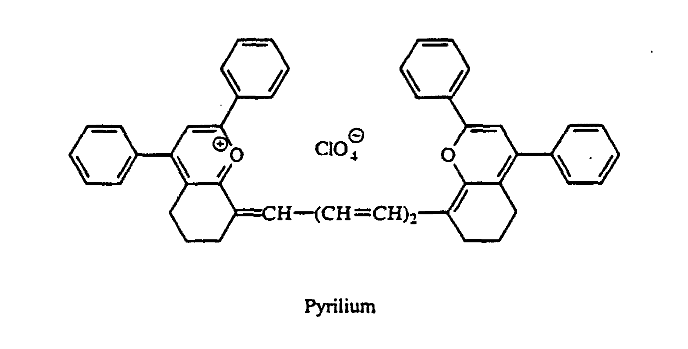

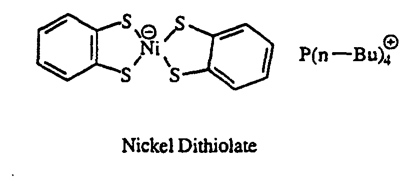

Parmi les colorants laser, on peut citer les colorants comportant un ou plusieurs chromophores choisis parmi un ou plusieurs complexes de porphyrine qui ont été modifiés par des métaux pour former des complexes de métal porphyrine.

Des exemples de chromophores convenables sont la vanadyl phtalocyanine t-butylée et le chlorure d'étain de la phtalocyanine t-butylée qui absorbent à une longueur d'onde de 694 nm et qui conviennent pour la protection vis-à-vis d'un laser à rubis.

Parmi les colorants et pigments photochromiques, on peut citer les spirooxazines et les chromènes.

Des colorants et pigments photochromiques du type spirooxazine sont décrits, entre autres, dans les brevets et demandes de brevets US-5 139 707, US-5 114 621, EP-0 245 020, EP-03 88 660 et WO 96/04590.

Des colorants et pigments photochromiques du type chromène sont décrits, entre autres, dans les brevets et demandes de brevets WO 90/07507, WO 92/09593, WO 93/17071, FR 2 688 782, EP-401958, EP-562915, US-3 567 605 et US-5 066 818.

Les colorants et pigments préférés sont les colorants et pigments azoïques et anthraquinoniques.

L'étape de coloration de l'article consiste à mettre la face correspondant à la couche superficielle photodégradée de l'article en matériau polycarbonate en contact avec un agent de coloration, par exemple sous forme d'une solution ou dispersion d'un ou plusieurs colorants ou pigments, de toute manière classique, telle que par trempage (dip) dans un bain de coloration ou par dépôt et centrifugation d'une solution de coloration sur la face photodégradée de l'article.

De préférence, la mise en contact de la face photodégradée de l'article avec l'agent de coloration s'effectue par trempage dans un bain de coloration.

Les bains et solutions de coloration sont classiquement des solutions et dispersions aqueuses d'un colorant ou d'un pigment ou de mélanges de colorants et pigments.

De préférence, ces bains et solutions contiennent également une quantité effective d'un agent tensio-actif, en particulier un alkyl benzène sulfonate. La proportion d'agent tensio-actif dans les bains ou les solutions varie généralement de 0 à 3%, préférentiellement 0,2% en poids.

La température des bains et solutions de coloration, lors de l'étape de coloration, est généralement comprise entre 85 et 100°C, en général de 94 à 95°C environ.

De préférence, après le traitement de coloration, les articles sont soumis à un traitement thermique de stabilisation de la coloration, à une température de préférence supérieure à 100°C et pouvant atteindre jusqu'à 140°C, de préférence de 130°C environ, pendant une durée suffisante pour fixer la coloration, généralement de 1 heure ou plus, de préférence de 2 heures environ.

Après le traitement de coloration et l'éventuel traitement thermique de stabilisation, on peut dans le procédé de l'invention procéder aux dépôts classiques sur les faces de l'article de couches de primaire, revêtement dur anti-abrasion et revêtement anti-reflets.

Etant donné la résistance aux chocs élevée des matériaux polycarbonates, les couches de primaire ont pour fonction essentielle de servir de couche d'accrochage favorisant l'adhésion des revêtements durs anti-abrasion sur l'article.

On a également trouvé que le dépôt de telles couches de primaire sur les faces photodégradées des articles supprimait les défauts de surface et perte d'adhérence éventuels dus à la photodégradation ou autres.

On peut utiliser dans le procédé de l'invention toute composition de primaire classiquement utilisée pour les articles en matériau polymère transparent, tels que des lentilles ophtalmiques, en particulier les couches de primaire anti-chocs classiques.

Parmi les compositions de primaires préférés, on peut citer les compositions à base de polyuréthanne thermoplastiques, telles celles décrites dans les brevets japonais 63-141001 et 63-87223, les compositions de primaires poly(méth)acryliques, telles celles décrites dans le brevet US-5 015 523, les compositions à base de polyuréthannes thermodurcissables, telles celles décrites dans le brevet EP-0404111 et les compositions à base de latex poly(méth)acryliques et latex de polyuréthanne, telles celles décrites dans les brevets US-5 316 791 et EP-0680492, WO 98/02376.

Les compositions de primaire préférées sont les compositions à base de polyuréthannes et les compositions à base de latex, en particulier les latex de polyuréthannes.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex poly(méth)acryliques préférés sont les latex de copolymères acrylate-styrène.

De tels latex de copolymères acrylate-styrène sont disponibles commercialement auprès de la Société ZENECA RESINS sous la dénomination NÉOCRYL®.

Les latex de polyuréthannes sont également connus et disponibles dans le commerce.

A titre d'exemple, on peut citer les latex de polyuréthannes contenant des motifs polyesters. De tels latex sont également commercialisés par la Société ZENECA RESINS sous la dénomination NÉOREZ® et par la Société BAXENDEN CHEMICAL sous la dénomination WITCOBOND®.

On peut également utiliser pour les primaires des mélanges de ces latex, en particulier de latex polyuréthanne et de latex poly(méth)acrylique.

Ces compositions de primaire peuvent être déposées sur les faces de l'article par trempage ou centrifugation puis séchées à une température d'au moins 70°C et pouvant aller jusqu'à 100°C, de préférence de l'ordre de 90°C, pendant une durée de 2 minutes à 2 heures, généralement de l'ordre de 15 minutes, pour former des couches de primaire ayant des épaisseurs, après cuisson, de 0,2 à 2,5 µm, de préférence 0,5 à 1,5 µm.

Le procédé de l'invention comprend également la formation sur les faces de l'article, en particulier la face photodégradée de l'article, de préférence revêtue d'une couche de primaire, d'une couche d'un revêtement dur anti-abrasion.

On peut utiliser pour former cette couche de revêtement dur anti-abrasion, toute composition classiquement utilisée à cette fin, en particulier dans le domaine de l'optique ophtalmique.

Parmi les compositions pour revêtement dur anti-abrasion préférées, on peut citer les compositions à base de poly(méth)acrylate et les compositions à base d'hydrolysat d'alcoxysilane, en particulier d'hydrolysat d'époxysilane, telles celles décrites dans le brevet français 93 02649 et le brevet US-4 211 823.

Une composition pour revêtement dur anti-abrasion préférée comprend un hydrolysat d'époxysilane et de dialkyldialcoxysilane, une charge colloïdale, telle que de la silice colloïdale, TiO₂ ou Sb₂O₅ et un catalyseur, de préférence un chélate d'aluminium, tel que l'acétylacétonate d'aluminium, le reste étant essentiellement constitué par des solvants classiquement utilisés pour la formulation de telles compositions.

Préférentiellement, l'hydrolysat utilisé est un hydrolysat de γ-glycidoxypropyl triméthoxysilane (GLYMO) et de diméthyl diéthoxysilane (DMDES).

A titre d'exemple, on peut citer une composition obtenue par hydrolyse d'un mélange en poids de 224 parties de GLYMO et 120 parties de DMDES, à laquelle on a ajouté 718 parties en poids de silice colloïdale à 30% dans le méthanol, 15 parties d'acétylacétonate d'aluminium et 44 parties d'éthylcellosolve.

Dans le cas d'une composition dure anti-abrasion à base de poly(méth)acrylate, la couche de primaire n'est pas nécessaire pour l'accrochage du revêtement anti-abrasion.

L'épaisseur du revêtement anti-abrasion est généralement comprise entre 1 et 10 µm et plus particulièrement entre 2 et 6 µm.

Par contre, une telle couche de primaire s'avère pratiquement nécessaire dans le cas d'un revêtement anti-abrasion à base d'hydrolysat d'époxysilane.

Le procédé de l'invention peut également comporter la formation d'une couche anti-reflets sur la couche de revêtement dur anti-abrasion.

A titre d'exemple, le revêtement anti-reflets peut être constitué d'un film mono- ou multicouche, de matériaux diélectriques tels que SiO, SiO₂, Si₃N₄, TiO₂, ZrO₂, Al₂O₃, MgF₂ ou Ta₂O₅, ou leurs mélanges. Il devient ainsi possible d'empêcher l'apparition d'une réflexion à l'interface lentille-air.

Ce revêtement anti-reflets est appliqué généralement par dépôt sous vide selon l'une des techniques suivantes :
1/ Par évaporation, éventuellement assistée par faisceau ionique.
2/ Par pulvérisation par faisceau d'ions.
3/ Par pulvérisation cathodique.
4/ Par dépôt chimique en phase vapeur assisté par plasma.

Outre le dépôt sous vide, on peut aussi envisager un dépôt d'une couche minérale par voie sol/gel, (par exemple à partir d'hydrolysats de tétraéthoxysilane).

Dans le cas où la pellicule comprend une seule couche, son épaisseur optique doit être égale à λ/4 où λ est une longueur d'onde comprise entre 450 et 650 nm.

Dans le cas d'un film multicouche comportant trois couches, on peut utiliser une combinaison correspondant à des épaisseurs optiques respectives λ/4-λ/2-λ/4 ou λ/4-λ/4-λ/4.

On peut en outre utiliser un film équivalent formé par plus de couches, à la place de l'une quelconque des couches faisant partie des trois couches précitées.

L'invention concerne également des articles transparents en matériau polycarbonate, tels que des verres optiques et des lentilles, ayant deux faces principales opposées et comprenant au moins une couche superficielle photodégradée depuis une des faces principales sur une épaisseur d'au moins 1 µm, généralement de 2 à 20 µm, et de préférence de 2 à 10 µm dans la totalité de l'épaisseur de laquelle est dispersé un agent de coloration.

De préférence, l'article comporte deux couches superficielles photodégradées depuis les deux faces principales opposées de l'article, ayant chacune une épaisseur d'au moins 1 µm, généralement 2 à 20 µm et de préférence 2 à 10 µm, dans lesquelles est dispersé l'agent de coloration.

L'article peut être revêtu sur une ou sur ses deux faces d'une couche de primaire, d'un revêtement dur anti-abrasion et éventuellement d'un revêtement anti-reflets, comme décrit précédemment en liaison avec le procédé de l'invention.

La suite de la description se réfère aux figures annexées, qui représentent respectivement :
Figure 1 - une vue de face schématique d'un dispositif de mise en oeuvre de l'étape d'irradiation d'un article transparent, tel qu'une lentille, en matériau polycarbonate, selon le procédé de l'invention; et
Figure 2 - un graphe du spectre de rayonnement de la source de lumière UV du dispositif de la figure 1.

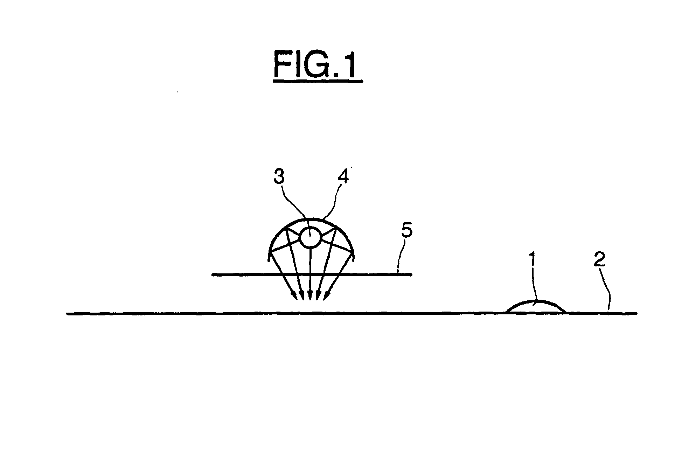

En se référant à la figure 1, un article transparent en matériau polycarbonate tel qu'une lentille 1, est amené au moyen d'un tapis 2 sous une source de rayonnement UV. La source de rayonnement UV, par exemple une lampe UV "D" de la Société FUSION UV SYSTEM fonctionnant à 40% de sa puissance nominale, comprend un bulbe 3 et un réflecteur 4 focalisant le faisceau lumineux à travers un quartz dépoli 5 sur la lentille 1 amenée par le tapis 2.

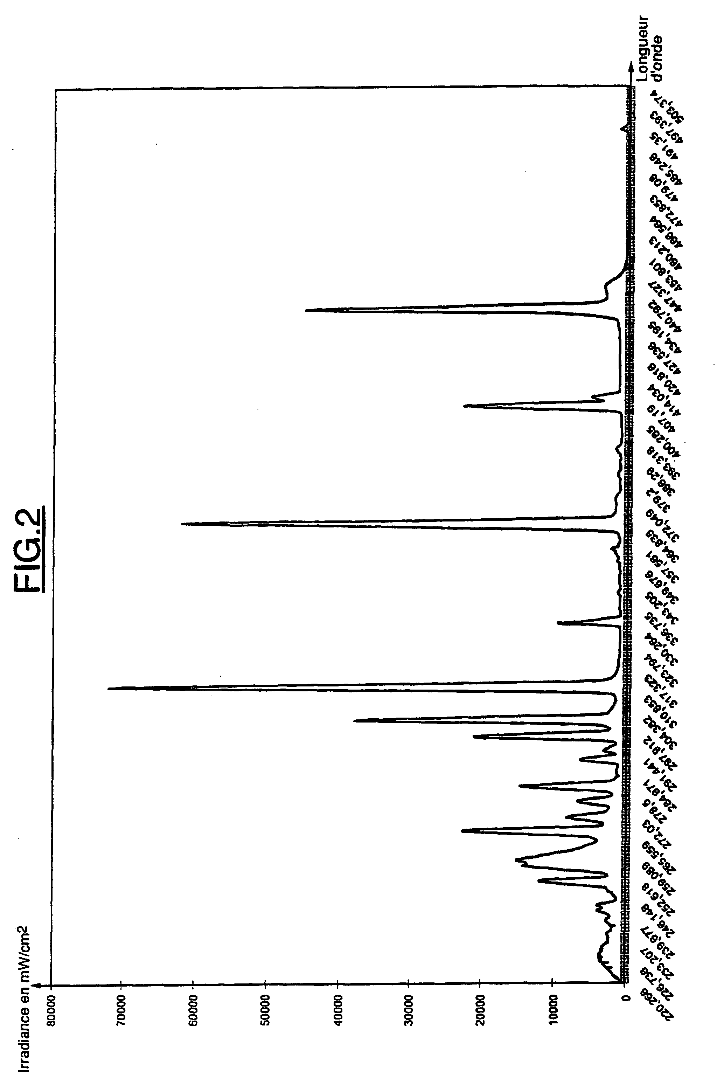

Le spectre du rayonnement UV émis par la lampe UV "D" fonctionnant à 40% de sa puissance nominale est représenté à la figure 2.

Avec une vitesse de défilement du tapis de 15 cm/minute, le bulbe 3 de la lampe située à 10 cm au-dessus du tapis et la lampe UV "D" fonctionnant à 40% de sa puissance nominale, la largeur du faisceau lumineux arrivant sur la lentille est de 1 cm environ. L'énergie de photodégradation reçue en 4 secondes par la lentille est donc de 16 J/cm² pour la partie du rayonnement UV de longueur d'onde ≤ 320 nm et de 5,73 J/cm² pour la partie du rayonnement UV > 320 nm.

En procédant comme indiqué ci-dessus, le matériau polycarbonate de la lentille 1 est photodégradé, depuis la face supérieure de l'article, sur une profondeur d'au moins 1 µm.

Bien évidemment, la vitesse de défilement du tapis et donc l'énergie reçue par la lentille 1 peuvent varier en fonction de la lampe utilisée et de la profondeur voulue de la couche photodégradée, les conditions devant toujours être telles que la profondeur de la couche superficielle photodégradée de l'article en matériau polycarbonate soit d'au moins 1 µm et mieux d'au moins 2 µm.

En général, la vitesse de défilement du tapis est de 5 cm/minute à 60 cm/minute, de préférence de 10 cm/minute à 30 cm/minute, pour obtenir les énergies d'irradiation voulues.

Dans tous les cas, l'irradiation doit être telle que la température atteinte par l'article irradié soit inférieure à la température de transition vitreuse (Tg) du matériau polycarbonate de l'article.

De préférence encore, la lentille est soumise au traitement d'irradiation sur ses deux faces principales pour former deux couches superficielles photodégradées d'au moins 1 µm d'épaisseur chacune à partir des faces de l'article 1.

Après le traitement d'irradiation, l'article 1 est coloré, par exemple par trempage dans un bain de coloration. Le bain de coloration est généralement à une température de 85-100°C, et le temps de séjour dans le bain peut varier de 10 minutes à 1 heure ou plus, et est en général de 30 minutes à 1 heure.

A titre d'exemple, on indique ci-après des compositions de bains de coloration, ainsi que la couleur obtenue.

| | Bain 1 Couleur vert | Bain 2 Couleur gris | Bain 3 Couleur marron |
|---|---|---|---|
| Eau | 1 l | 1 l | 1 l |
| AKBS | 2 ml | 2 ml | 2 ml |
| Bleu TERATOP® GLF | 1,25 g | 3,95 g | 0,95 g |
| Jaune TERATOP® GNL | 9,5 g | 8 g | 12 g |
| Rouge TERATOP® 3G | 0,1 g | 0,75 g | 0,33 g |
| AKBS : Alkyl benzène sulfonate. | | | |

(Ces bains sont obtenus en mélangeant les différents ingrédients dans l'eau à 60°C).

Les bains de coloration ci-dessus sont utilisés à une température de 94°C.

Après retrait de l'article du bain de coloration, l'article est généralement soumis à un traitement de relargage de l'excès d'agent de coloration par immersion dans une solution aqueuse de polyéthylène glycol à 55°C, puis rincée avec de l'eau désionisée à 55°C.

A ce stade, l'article est de préférence soumis à un traitement thermique de stabilisation de la coloration dans lequel l'article est chauffé pendant 2 heures à 130°C.

On va maintenant décrire un exemple de réalisation sur l'article coloré obtenu, d'un revêtement dur anti-abrasion.

L'article coloré est prétraité avec une solution de soude à 50°C pendant 4 minutes, puis on immerge l'article pendant 4 minutes dans une composition de primaire, par exemple un latex de polyuréthanne (Polyester/polyol de la Société BAXENDEN) à 5°C. Après retrait, la couche de primaire est séchée à 80°C pendant 20 minutes et on laisse refroidir pendant 15 minutes.

On immerge alors pendant 4 minutes la lentille dans une composition pour revêtement dur anti-abrasion à 5°C.

Enfin, on cuit la composition de revêtement dur anti-abrasion déposée pendant 3 heures à 100°C.

On obtient ainsi un article en matériau PC coloré ayant une couche de primaire et une couche de revêtement dur anti-abrasion sur ses deux faces.

La composition pour revêtement anti-abrasion a été préparée de la façon suivante :

On fait tomber goutte à goutte 80,5 parties de HCl 0,1 N dans une solution contenant 224 parties de GLYMO et 120 parties de DMDES.

La solution est agitée 24 heures à température ambiante, puis on ajoute 718 parties de silice colloïdale à 30% dans le méthanol, 15 parties d'acétylacétonate d'aluminium et 44 parties d'éthylcellosolve. On ajoute enfin une petite quantité d'agent tensio-actif.

L'extrait sec théorique de la composition renferme environ 13% de matière solide provenant du DMDES hydrolysé.

### EXEMPLES

On a soumis des verres finis, surfacés, en homopolycarbonate de bisphénol A, fabriqués par la Société GENTEX, de puissance optique -4, - 2, 0, +4 dioptries, au traitement de coloration décrit ci-dessus.

Après le traitement UV de photodégradation, les verres étaient ébarbés et dépoussiérés par soufflage d'air comprimé.

Les verres étaient soumis au traitement UV de photodégradation ci-dessus sur les deux faces, puis au traitement de coloration par trempage de 20 minutes dans les bains ci-dessus à 94°C.

Après relargage de l'excès d'agent de coloration, rinçage à l'eau désionisée et traitement thermique de stabilisation comme décrit ci-dessus, on a déterminé le taux de transmission τᵥ (en référence aux normes ISO/CIE 10526 : 1991 et ISO/CIE 10527 : 1991 et le projet de norme ISO/DIS 8980-3 de 1997). Pour tous les verres, le taux de transmission τᵥ était de 17-30% correspondant à la classification 2 telle que déterminée dans le projet de norme ISO/DIS 8980-3.

## Revendications

1. Procédé de coloration d'un article transparent en matériau polycarbonate ne comportant pas de motifs polyesters et comportant deux faces principales opposées comprenant :
a) la photodégradation du matériau polycarbonate de l'article transparent par irradiation au moyen d'un rayonnement UV dont au moins 50% de l'énergie d'irradiation provient d'une partie de rayonnement de longueur d'onde ≤ 320 nm, depuis au moins une des faces principales de l'article, pour réaliser dans l'article au moins une couche superficielle photodégradée du matériau polycarbonate ayant une épaisseur d'au moins 1 µm, de préférence d'au moins 2 µm; et
b) la mise en contact d'au moins ladite face principale de l'article avec un agent de coloration pour faire diffuser l'agent de coloration dans une épaisseur d'au moins 1 µm, de préférence d'au moins 2 µm, de la couche superficielle photodégradée.

2. Procédé selon la revendication 1, **caractérisé en ce qu'**il comprend la photodégradation par irradiation au moyen d'un rayonnement UV prédéterminé depuis les deux faces principales opposées de l'article pour réaliser dans l'article deux couches superficielles photodégradées du matériau polycarbonate ayant chacune une épaisseur d'au moins 1 µm, de préférence d'au moins 2 µm, et **en ce que** les deux faces principales opposées de l'article sont mises en contact avec l'agent de coloration pour faire diffuser l'agent de coloration dans une épaisseur d'au moins 1 µm, de préférence d'au moins 2 µm, pour ces deux couches superficielles photodégradées.

3. Procédé selon la revendication 1 ou 2, **caractérisé en ce que** la ou les couches superficielles photodégradées ont une épaisseur de 2 à 20 µm, de préférence de 2 à 10 µm.

4. Procédé selon' l'une quelconque des revendications 1 à 3, **caractérisé en ce que** l'agent de coloration est diffusé dans la totalité de l'épaisseur de la (ou des) couche(s) superficielle(s) photodégradée(s).

5. Procédé selon l'une quelconque des revendications 1 à 4, **caractérisé en ce que** au moins 60%, de préférence au moins 65%, de l'énergie d'irradiation provient d'une partie du rayonnement de longueur d'onde ≤ 320 nm.

6. Procédé selon l'une quelconque des revendications 1 à 5,
**caractérisé en ce que** l'énergie d'irradiation due à la partie du rayonnement de longueur d'onde ≤ 320 nm est de 2,4 J/cm² à 48 J/cm², de préférence 10 J/cm² à 30 J/cm².

7. Procédé selon l'une quelconque des revendications 1 à 6, **caractérisé en ce que** le rayonnement UV comporte une partie de rayonnement de longueur d'onde > 320 nm et est tel que l'énergie d'irradiation due à la partie de rayonnement de longueur d'onde > 320 nm est de 0,9 J/cm² à 15 J/cm², de préférence 2 J/cm² à 8 J/cm².

8. Procédé selon l'une quelconque des revendications 1 à 7, **caractérisé en ce que** le matériau polycarbonate est choisi parmi les homopolycarbonates de bisphénol A.

9. Procédé selon l'une quelconque des revendications 1 à 8, **caractérisé en ce que** le matériau polycarbonate comprend un absorbeur UV.

10. Procédé selon l'une quelconque des revendications 1 à 9, **caractérisé en ce que** la mise en contact de la ou des face principales opposées de l'article avec l'agent de coloration se fait par trempage dans un bain de coloration contenant l'agent de coloration.

11. Procédé selon la revendication 10, **caractérisé en ce que** le bain de coloration contient un tensio-actif alkyl benzène sulfonate.

12. Procédé selon l'une quelconque des revendications 1 à 11, **caractérisé en ce qu'**il comprend après l'étape b), c) un traitement thermique de stabilisation pour fixer l'agent de coloration.

13. Procédé selon la revendication 12, caractérisé ce ce que le traitement thermique de stabilisation consiste à chauffer l'article à une température de 100 à 140°C pendant 1 heure ou plus.

14. Procédé selon la revendication 13, **caractérisé en ce que** le traitement thermique de stabilisation consiste à chauffer l'article à 130°C pendant 2 heures.

15. Procédé selon l'une quelconque des revendications 1 à 14, **caractérisé en ce que** l'agent de coloration est choisi parmi les colorants azoïques, les colorants anthraquinoniques et leurs mélanges.

16. Procédé selon l'une quelconque des revendications 1 à 14, **caractérisé en ce que** l'agent de coloration est choisi parmi les composés photochromiques et leurs mélanges.

17. Procédé selon l'une quelconque des revendications 1 à 16,
**caractérisé en ce qu'**il comprend l'application d'une couche d'un matériau dur anti-abrasion sur au moins une des faces principales opposées de l'article depuis laquelle le matériau polycarbonate a été photodégradé.

18. Procédé selon la revendication 17, **caractérisé en ce que** le matériau dur anti-abrasion est une résine (méth)acrylique.

19. Procédé selon la revendication 17, **caractérisé en ce qu'**il comprend, préalablement au dépôt de la couche de matériau dur anti-abrasion, un dépôt sur ladite face de l'article d'une couche de primaire favorisant l'adhésion de la couche de matériau dur anti-abrasion.

20. Procédé selon la revendication 19, **caractérisé en ce que** le primaire est choisi parmi les polyuréthannes thermoplastiques, les polyuréthannes thermodurcissables, les latex poly(méth)acryliques, et les latex de polyuréthanne.

21. Procédé selon l'une des revendications 19 ou 20, **caractérisé en ce que** le matériau dur anti-abrasion résulte du durcissement d'un hydrolysat d'époxysilane.

22. Procédé selon la revendication 21, **caractérisé en ce que** l'hydrolysat contient une charge colloïdale choisie parmi SiO₂, TiO₂ et Sb₂O₅.

23. Procédé selon l'une quelconque des revendications 17 à 22, **caractérisé en ce qu'**il comprend le dépôt sur la couche de matériau dur anti-abrasion d'une couche d'un matériau anti-reflets.

24. Procédé selon l'une quelconque des revendications 1 à 23, **caractérisé en ce que** l'article est un article d'optique ou ophtalmique.

25. Procédé selon la revendication 24, **caractérisé en ce que** l'article est un verre de lunette.

26. Article transparent en matériau polycarbonate ne contenant pas de motifs polyesters comprenant au moins une couche superficielle photodégradée depuis une des faces principales de l'article et ayant une épaisseur d'au moins 1 µm, de préférence d'au moins 2 µm; dans laquelle est réparti un agent de coloration, dans une épaisseur d'au moins 1 µm, de préférence d'au moins 2 µm.

27. Article transparent selon la revendication 26, **caractérisé en ce qu'**il comprend 'deux couches superficielles photodégradées depuis deux faces principales opposées de l'article et d'épaisseur d'au moins 1 µm, de préférence d'au moins 2 µm, dans laquelle est réparti un agent de coloration, dans une épaisseur d'au moins 1 µm, de préférence d'au moins 2 µm.

28. Article selon la revendication 26 ou 27, **caractérisé en ce que** l'épaisseur de la ou des couche(s) superficielle(s) photodégradée(s) est de 2 à 20 µm, de préférence 2 à 10 µm.

29. Article selon l'une quelconque des revendications 26 à 28, **caractérisé en ce que** l'agent de coloration est réparti dans toute l'épaisseur de la (ou des) couche(s) superficielle(s) photodégradée(s).

30. Article selon l'une quelconque des revendications 26 à 29, **caractérisé en ce que** le matériau polycarbonate est un homopolycarbonate de bisphénol A.

31. Article selon l'une quelconque des revendications 26 à 30, **caractérisé en ce que** le matériau polycarbonate contient un absorbeur UV.

32. Article selon l'une quelconque des revendications 26 à 31, **caractérisé en ce qu'**il comprend au moins sur la face correspondant à la couche superficielle photodégradée une couche d'un matériau dur anti-abrasion.

33. Article selon la revendication 32, **caractérisé en ce qu'**il comprend une couché de primaire favorisant l'adhérence entre ladite face de l'article et la couche de matériau dur anti-abrasion.

34. Article selon la revendication 33, **caractérisé en ce que** le matériau dur anti-abrasion résulte du durcissement d'un hydrolysat d'époxysilane.

35. Article selon la revendication 33 ou 34, **caractérisé en ce que** la couche de primaire est obtenue à partir de polyuréthanne thermoplastique, de polyuréthanne thermodurcissable, de latex poly (méth)acrylique, de latex de polyuréthanne ou d'un mélange de ces latex.

36. Article selon l'une quelconque des revendications 26 à 35, **caractérisé en ce qu'**il comprend sur chacune de ses faces principales, une couche de primaire et une couche de revêtement dur anti-abrasion.

37. Article selon l'une quelconque des revendications 32 à 36, **caractérisé en ce qu'**il comprend une couche anti-reflets sur la ou les couche(s) de matériau dur anti-abrasion.

38. Article selon l'une quelconque des revendications 26 à 37, **caractérisé en ce que** l'article est un article d'optique ou ophtalmique.

39. Article selon la revendication 38, **caractérisé en ce que** l'article est un verre de lunette.

## Patentansprüche

1. Verfahren zum Färben eines durchsichtigen Artikels aus einem Polycarbonatmaterial ohne Polyestereinheiten und mit zwei gegenüberliegenden Hauptseiten, umfassend:
a) Photochemischer Abbau des Polycarbonatmaterials des durchsichtigen Artikels durch Bestrahlung mittels UV-Strahlung, wobei mindestens 50 % der Strahlungsenergie aus einem Teil der Strahlung mit einer Wellenlänge von ≤ 320 nm stammt, auf mindestens einer der Hauptseiten des Artikels, um in dem Artikel mindestens eine oberflächliche Schicht aus photochemisch abgebautem Polycarbonat mit einer Dicke von mindestens 1 µm, vorzugsweise mindestens 2 µm, zu erzeugen; und
b) In-Kontakt-Bringen mindestens einer dieser Hauptseiten des Artikels mit einem Farbmittel, um das Farbmittel in eine Dicke von mindestens 1 µm, vorzugsweise 2 µm, der photochemisch abgebauten oberflächlichen Schicht eindiffundieren zu lassen.

2. Verfahren gemäß Anspruch 1, **dadurch gekennzeichnet, dass** es den photochemischen Abbau durch Bestrahlung mittels einer vorher festgelegten UV-Strahlung auf den beiden gegenüberliegenden Hauptseiten des Artikels umfasst, um in dem Artikel zwei photochemisch abgebaute oberflächliche Schichten des Polycarbonatmaterials zu erzeugen, welche jede eine Dicke von mindestens 1 µm, vorzugsweise mindestens 2 µm, aufweist, und dass die beiden gegenüberliegenden Hauptseiten des Artikels mit einem Farbmittel in Kontakt gebracht werden, um das Farbmittel in eine Dicke von mindestens 1 µm, vorzugsweise mindestens 2 µm, dieser beiden photochemisch abgebauten oberflächlichen Schichten eindiffundieren zu lassen.

3. Verfahren gemäß Anspruch 1 oder 2, **dadurch gekennzeichnet, dass** die photochemisch abgebaute(n) oberflächliche(n) Schicht(en) eine Dicke von 2 bis 20 µm, vorzugsweise 2 bis 10 µm, aufweisen.

4. Verfahren gemäß einem der Ansprüche 1 bis 3, **dadurch gekennzeichnet, dass** das Farbmittel in die gesamten Dicke der photochemisch abgebauten oberflächlichen Schicht(en) eindiffundiert.

5. Verfahren gemäß einem der Ansprüche 1 bis 4, **dadurch gekennzeichnet, dass** mindestens 60 %, vorzugsweise 65 %, der Strahlungsenergie aus einem Teil der Strahlung mit einer Wellenlänge ≤ 320 nm stammt.

6. Verfahren gemäß einem der Ansprüche 1 bis 5, **dadurch gekennzeichnet, dass** die Strahlungsenergie aus dem Teil der Strahlung mit einer Wellenlänge ≤ 320 nm 2,4 J/cm² bis 48 J/cm², vorzugsweise 10 J/cm² bis 30 J/cm², beträgt.

7. Verfahren gemäß einem der Ansprüche 1 bis 6, **dadurch gekennzeichnet, dass** die UV-Strahlung einen Teil der Strahlung mit einer Wellenlänge > 320 nm umfasst und dergestalt ist, dass die Strahlungsenergie aus dem Teil der Strahlung mit einer Wellenlänge > 320 nm 0,9 J/cm² bis 15 J/cm², vorzugsweise 2 J/cm² bis 8 J/cm², beträgt.

8. Verfahren gemäß einem der Ansprüche 1 bis 7, **dadurch gekennzeichnet, dass** das Polycarbonatmaterial ausgewählt wird aus den Homopolycarbonaten des Bisphenols A.

9. Verfahren gemäß einem der Ansprüche 1 bis 8, **dadurch gekennzeichnet, dass** das Polycarbonatmaterial ein UV-Absorptionsmittel enthält.

10. Verfahren gemäß einem der Ansprüche 1 bis 9, **dadurch gekennzeichnet, dass** das In-Kontakt-Bringen der gegenüberliegenden Hauptseiten des Artikels mit einem Farbmittel mittels Eintauchen in ein Farbmittelbad, welches das Farbmittel enthält, durchgeführt wird.

11. Verfahren gemäß Anspruch 10, **dadurch gekennzeichnet, dass** das Farbmittelbad ein Alkylbenzolsulfonat-Tensid enthält.

12. Verfahren gemäß einem der Ansprüche 1 bis 11, **dadurch gekennzeichnet, dass** es nach Schritt b) eine thermische Stabilisierungsbehandlung c) zum Fixieren des Farbmittels umfasst.

13. Verfahren gemäß Anspruch 12, **dadurch gekennzeichnet, dass** die thermische Stabilisierungsbehandlung in einem Erhitzen des Artikels auf eine Temperatur zwischen 100 und 140°C über eine Stunde oder mehr besteht.

14. Verfahren gemäß Anspruch 13, **dadurch gekennzeichnet, dass** die thermische Stabilisierungsbehandlung in einem Erhitzen des Artikels auf 130 °C über 2 Stunden besteht.

15. Verfahren gemäß einem der Ansprüche 1 bis 14, **dadurch gekennzeichnet, dass** das Farbmittel ausgewählt wird aus den Azofarbstoffen, Anthrachinonfarbstoffen und ihren Mischungen.

16. Verfahren gemäß einem der Ansprüche 1 bis 14, **dadurch gekennzeichnet, dass** das Farbmittel ausgewählt wird aus photochromen Verbindungen und ihren Mischungen.

17. Verfahren gemäß einem der Ansprüchen 1 bis 16, **dadurch gekennzeichnet, dass** es die Auftragung einer Schicht aus einem harten kratzfesten Material auf mindestens einer der gegenüberliegenden Hauptseiten des Artikels umfasst, auf der das Polycarbonat photochemisch abgebaut wurde.

18. Verfahren gemäß Anspruch 17, **dadurch gekennzeichnet, dass** das harte kratzfeste Material ein (Meth)acrylharz ist.

19. Verfahren gemäß Anspruch 17, **dadurch gekennzeichnet, dass** es, vor dem Abscheiden der Schicht aus einem harten kratzfesten Material, eine Abscheidung einer ersten Schicht auf dieser Artikelseite umfasst, welche die Adhäsion der Schicht aus hartem kratzfestem Material erleichtert.

20. Verfahren gemäß Anspruch 19, **dadurch gekennzeichnet, dass** diese erste Schicht ausgewählt wird aus thermoplastischen Polyurethanen, thermisch härtbaren Polyurethanen, Poly(meth)acryl-Latizes und Polyurethan-Latizes.

21. Verfahren gemäß Anspruch 19 oder 20, **dadurch gekennzeichnet, dass** das harte kratzfeste Material aus einer Härtung eines Epoxysilan-Hydrolysats stammt.

22. Verfahren gemäß Anspruch 21, **dadurch gekennzeichnet, dass** das Hydrolysat ein kolloidales Füllmittel enthält, ausgewählt aus SiO₂, TiO₂ und Sb₂O₅.

23. Verfahren gemäß einem der Ansprüche 17 bis 22, **dadurch gekennzeichnet, dass** es das Aufbringen eines Antireflex-Materials auf die Schicht aus hartem kratzfestem Material umfasst.

24. Verfahren gemäß einem der Ansprüche 1 bis 23, **dadurch gekennzeichnet, dass** der Artikel ein optischer oder opthalmischer Artikel ist.

25. Verfahren gemäß Anspruch 24, **dadurch gekennzeichnet, dass** der Artikel ein Brillenglas ist.

26. Durchsichtiger Artikel aus einem Polycarbonat ohne Polyestereinheiten, umfassend mindestens eine photochemisch abgebaute oberflächliche Schicht auf einer der Hauptseiten des Artikels mit einer Dicke von mindestens 1 µm, vorzugsweise mindestens 2 µm, in welche ein Farbmittel in einer Dicke von mindestens 1 µm, vorzugsweise mindestens 2 µm, verteilt ist.

27. Durchsichtiger Artikel gemäß Anspruch 26, **dadurch gekennzeichnet, dass** er zwei photochemisch abgebaute oberflächliche Schichten auf den beiden gegenüberliegenden Hauptseiten des Artikels mit einer Dicke von mindestens 1 µm, vorzugsweise mindestens 2 µm umfasst, in welchen ein Farbmittel in einer Dicke von mindestens 1 µm, vorzugsweise mindestens 2 µm, verteilt ist.

28. Artikel gemäß Anspruch 26 oder 27, **dadurch gekennzeichnet, dass** die Dicke der photochemisch abgebauten oberflächlichen Schicht(en) 2 bis 20 µm, vorzugsweise 2 bis 10 µm beträgt.

29. Artikel gemäß einem der Ansprüche 26 bis 28, **dadurch gekennzeichnet, dass** das Farbmittel in der gesamten Dicke der photochemisch abgebauten oberflächlichen Schicht(en) verteilt ist.

30. Artikel gemäß einem der Ansprüche 26 bis 29, **dadurch gekennzeichnet, dass** das Polycarbonatmaterial ein Homopolycarbonat des Bisphenols A ist.

31. Artikel gemäß einem der Ansprüche 26 bis 30, **dadurch gekennzeichnet, dass** das Polycarbonatmaterial ein UV-Absorptionsmittel enthält.

32. Artikel gemäß einem der Ansprüche 26 bis 31, **dadurch gekennzeichnet, dass** er auf der Seite mit der photochemisch abgebauten oberflächlichen Schicht eine Schicht aus einem harten kratzfesten Material umfasst.

33. Artikel gemäß Anspruch 32, **dadurch gekennzeichnet, dass** er zwischen dieser Seite des Artikels und der Schicht aus hartem kratzfestem Material eine erste Schicht umfasst, welche die Adhäsion erleichtert.

34. Artikel gemäß Anspruch 33, **dadurch gekennzeichnet, dass** das harte kratzfeste Material aus einer Härtung eines Epoxysilan-Hydrolysats stammt.

35. Artikel gemäß Anspruch 33 oder 34, **dadurch gekennzeichnet, dass** die erste Schicht ausgehend von thermoplastischen Polyurethanen, thermisch härtbaren Polyurethanen, Poly(meth)acryl-Latex und Polyurethan-Latex oder einer Mischung dieser Latizes erhalten wird.

36. Artikel gemäß einem der Ansprüche 26 bis 35, **dadurch gekennzeichnet, dass** er auf jeder der Hauptseiten eine erste Schicht und eine Schicht mit harter kratzfester Beschichtung umfasst.

37. Artikel gemäß einem der Ansprüche 32 bis 36, **dadurch gekennzeichnet, dass** er auf der/den Schicht(en) aus hartem kratzfestem Material eine Antireflex-Schicht umfasst.

38. Artikel gemäß einem der Ansprüche 26 bis 37, **dadurch gekennzeichnet, dass** der Artikel ein optischer oder ophthalmischer Artikel ist.

39. Artikel gemäß Anspruch 38, **dadurch gekennzeichnet, dass** der Artikel ein Brillenglas ist.

## Claims

1. Method for colouring a transparent article made of polycarbonate not containing polyester units and having two opposite principal faces, comprising :
a) the photodegradation of the polycarbonate material of the transparent article by irradiation of at least one of the principal faces of the article with a UV radiation of which at least 50% of the radiation energy is a radiation having a wavelength ≤ 320 nm, to produce in the article at least one photodegraded surface layer of the polycarbonate material with a thickness of at least 1 preferably of at least 2 µm ; and
b) placing in contact at least said principal face of the article with a colouring agent so as to diffuse the colouring agent within a thickness of at least 1 preferably of at least 2 µm of the photodegraded surface layer.

2. Method according to claim 1, **characterized in that** it comprises the photodegradation by irradiation by a predetermined UV radiation of the two opposite principal faces of the article to produce in the article two photodegraded surface layers of the polycarbonate material, each having a thickness of at least 1 preferably of at least 2 µm, and **in that** the two opposite principal faces of the article are placed in contact with the colouring agent so as to diffuse the colouring agent within a thickness of at least 1 preferably of at least 2 µm for these two photodegraded surface layers.

3. Method according to claims 1 or 2, **characterized in that** the photodegraded surface layer or layers have a thickness of 2 to 20 µm, preferably 2 to 10 µm.

4. Method according to anyone of claims 1 to 3, **characterized in that** the colouring agent is diffused throughout the entire thickness of the photodegraded surface layer or layers.

5. Method according to anyone of claims 1 to 4, **characterized in that** at least 60%, preferably at least 65%, of the radiation energy is a radiation having a wavelength ≤ 320 nm.

6. Method according to anyone of claims 1 to 5, **characterized in that** the energy of the irradiation due to the part of the radiation with wavelength ≤ 320 nm is from 2.4 J/cm² to 48 J/cm², preferably 10 J/cm² to 30 J/cm².

7. Method according to anyone of claims 1 to 6, **characterized in that** the UV radiation comprises a part of the radiation with wavelength > 320 nm and is such that the energy of the irradiation due to the part of the radiation with wavelength > 320 nm is from 0.9 J/cm² to 15 J/cm², preferably 2 J/cm² to 8 J/cm².

8. Method according to anyone of claims 1 to 7, **characterized in that** the polycarbonate material is selected from the bisphenol A homopolycarbonates.

9. Method according to anyone of claims 1 to 8, **characterized in that** the polycarbonate material comprises a UV absorber.

10. Method according to anyone of claims 1 to 9, **characterized in that** the contact of the opposite principal face or faces of the article with the colouring agent is performed by dipping in a colouring bath containing the colouring agent.

11. Method according to claim 10, **characterized in that** the colouring bath comprises a surface-active alkyl benzene sulfonate.

12. Method according to anyone of claims 1 to 11, **characterized in that** it includes, after the step b), c) a thermal stabilization treatment to fix the colouring agent.

13. Method according to claim 12, **characterized in that** the thermal stabilization treatment consists of heating the article to a temperature of 100 to 140°C for 1 hour or more.

14. Method according to claim 13, **characterized in that** the thermal stabilization treatment consists of heating the article to 130°C for 2 hours.

15. Method according to anyone of claims 1 to 14, **characterized in that** the colouring agent is selected from the azo dyes, the anthraquinone dyes and their mixtures.

16. Method according to anyone of claims 1 to 14, **characterized in that** the colouring agent is selected from the photochromic compounds and their mixtures.

17. Method according to anyone of claims 1 to 16, **characterized in that** it comprises the application of a layer of a hard anti-abrasion material onto at least one of the opposite principal faces of the article on which the polycarbonate material has been photodegraded.

18. Method according to claim 17, **characterized in that** the hard anti-abrasion material is a (meth)acrylic resin.

19. Method according to claim 17, **characterized in that** it comprises, prior to the deposit of the layer of hard anti-abrasion material, a deposit on said face of the article of a primer layer improving the adhesion of the layer of hard anti-abrasion material.

20. Method according to claim 19, **characterized in that** the primer is selected from the thermoplastic polyurethanes, the thermosetting polyurethanes, the poly(meth)acrylic latexes, and the polyurethane latexes.

21. Method according to one of claims 19 or 20, **characterized in that** the hard anti-abrasion material results from the curing of a hydrolysate of epoxysilane.

22. Method according to claim 21, **characterized in that** the hydrolysate comprises a colloidal filler, selected from SiO₂, TiO₂ and Sb₂O₅.

23. Method according to anyone of claims 17 to 22, **characterized in that** it comprises the deposit of a layer of an anti-reflection material onto the layer of hard anti-abrasion material.

24. Method according to anyone of claims 1 to 23, **characterized in that** the article is an optical or ophthalmic article.

25. Method according to claim 24, **characterized in that** the article is a spectacle lens.

26. Transparent article made from polycarbonate not containing polyester units, comprising at least one photodegraded surface layer on one of the principal faces of the article and having a thickness of at least 1 preferably of at least 2 µm in which is diffused a colouring agent, within a thickness of at least 1 preferably of at least 2 µm.

27. Transparent article according to claim 26, **characterized in that** it comprises two photodegraded surface layers on two opposite principal faces of the article with a thickness of at least 1 preferably of at least 2 µm in which are diffused a colouring agent, within a thickness of at least 1 preferably of at least 2 µm.

28. Article according to claim 26 or 27, **characterized in that** the thickness of the photodegraded surface layer or layers is from 2 to 20 µm, preferably 2 to 10 µm.

29. Article according to anyone of claims 26 to 28, **characterized in that** the colouring agent is diffused throughout the entire thickness of the photodegraded surface layer or layers.

30. Article according to anyone of claims 26 to 29, **characterized in that** the polycarbonate material is a bisphenol A homopolycarbonate.

31. Article according to anyone of claims 26 to 30, **characterized in that** the polycarbonate material comprises a UV absorber.

32. Article according to anyone of claims 26 to 31, **characterized in that** it comprises a layer of a hard anti-abrasion material on at least the face corresponding to the photodegraded surface layer.

33. Article according to claim 32, **characterized in that** it comprises a primer layer improving the adhesion between said face of the article and the layer of hard anti-abrasion material.

34. Article according to claim 33, **characterized in that** the hard anti-abrasion material results from the curing of a hydrolysate of epoxysilane

35. Article according to claim 33 or 34, **characterized in that** the primer layer is obtained from a thermoplastic polyurethane, a thermosetting polyurethane, a poly(meth)acrylic latex, a polyurethane latex or a mixture of these latexes.

36. Article according to anyone of claims 26 to 35, **characterized in that** it comprises a layer of primer and a layer of hard anti-abrasion coating on each of its principal faces.

37. Article according to anyone of claims 32 to 36, **characterized in that** it comprises an anti-reflection layer on the layer or layers of hard anti-abrasion material.

38. Article according to anyone of claims 26 to 37, **characterized in that** the article is an optical or ophthalmic article.

39. Article according to claim 38, **characterized in that** the article is a spectacle lens.
